# FASCICULE DE BREVET EUROPEEN

(11) **EP 2 732 745 B1**
(45) Date de publication et mention de la délivrance du brevet: **27.04.2016**
(21) Numéro de dépôt: 13193379.8
(22) Date de dépôt: 18.11.2013
(51) Int. Cl.: A47K 11/03

(54) **Dispositif de toilette sèche**
Trockentoilettenvorrichtung
Dry toilet device

(30) Priorité: 20.11.2012 FR 1261043
(43) Date de publication de la demande: 21.05.2014
(73) Titulaire: Association des Paralysés de France APF, 75013 Paris 13 (FR)
(72) Inventeur: Cusson, Philippe, 56190 Muzillac (FR); Pogu, Guy, 56190 Ambon (FR)
(74) Mandataire: Novagraaf Technologies

(56) Documents cités:
- EP-A2- 0 879 576
- FR-A- 1 510 974
- FR-A1- 2 952 516
- FR-A1- 2 976 172
- US-A1- 2012 011 645

## Description

La présente invention concerne, de façon générale, le domaine des dispositifs de toilette sèche.

Il est connu de l'art antérieur de tels dispositifs.

Par exemple, le document FR 2 952 516 présente un dispositif de toilette sèche de type autonettoyante constituée d'une cabine avec une porte d'entrée comportant intérieurement une assise avec lunette positionnée au dessus d'une zone de récupération.

Le dispositif de toilette sèche comprend un chariot présentant une réserve de sciure, coulissant selon un plan incliné au dessus du fond d'une cuvette en plan incliné et située au dessous de la lunette.

Le chariot actionne en position basse un distributeur situé sous une réserve de sciure disposée en vis-à-vis de la zone basse de la cuvette latéralement à la cuvette.

A chaque ouverture de la porte, le chariot muni d'un racloir est entraîné en partie haute par un moyen de liaison souple afin d'évacuer en partie haute de la pente l'ensemble composé de la sciure et des selles raclés sur le fond de la cuvette.

Le chariot redescend ensuite en position basse où il entraîne le distributeur pour la délivrance d'une nouvelle dose de sciure tandis que les selles liquides s'évacuent automatiquement le long de la pente descendante de la cuvette.

Le document DE 33 17 953 décrit un dispositif de toilette sèche avec une cuvette qui peut être fermée de façon à cacher les selles et qui comporte une raclette pour répartir uniformément les selles.

Le document EP 879 576 divulgue un dispositif de toilette sèche comportant toutes les caractéristiques du préambule de la revendication 1.

Il existe un besoin de réaliser des dispositifs de toilette sèche simples à fabriquer et à nettoyer et c'est l'objet de la présente invention.

A cette fin, le dispositif de toilette sèche est remarquable en ce qu'il comporte les caractéristiques de la revendication 1.

Dans le mode de réalisation préféré, les moyens de rappel comportent une structure de contrepoids comportant au moins un poids fixé à un bras de contrepoids fixé directement ou indirectement au bras de rotation.

Par exemple, le bras de contrepoids est fixé sur le bras de rotation par l'intermédiaire d'une bielle.

Avantageusement, le dispositif de toilette sèche comporte des moyens de raclage permettant d'obtenir une force de raclage de la raclette sur la partie en arc de cercle de la cuvette rigide, dans le sens de la descente, supérieure à la force de raclage obtenue dans le sens de la remontée vers la position initiale haute.

Les moyens de raclage comportent un axe de rotation du bras de rotation décentré par rapport au centre géométrique de la partie en arc de cercle.

Dans une première réalisation, les moyens de raclage comportent une raclette équipée d'un élément souple de raclage et d'au moins un élément rigide situé par rapport à l'élément souple de façon à permettre une plus grande déformation de l'élément souple pendant la remontée.

Dans une deuxième réalisation, les moyens de raclage comportent une raclette d'évacuation mobile en rotation par rapport au bras de rotation.

Le bras de rotation pivote sur un arbre de rotation situé au-dessus de la cuvette rigide.

Le bras de rotation présente une partie articulée sur l'arbre de rotation et une partie perpendiculaire à la partie articulée comportant à une extrémité inférieure la raclette d'évacuation des selles.

Le dispositif de toilette sèche peut comporter une deuxième raclette montée mobile en rotation par rapport au bras de rotation, à proximité de l'ouverture inférieure de l'évacuation des selles, de façon à nettoyer la raclette d'évacuation des selles après sa descente.

Il comporte également un élément d'obturation de l'ouverture inférieure de l'évacuation des selles fixé au bras de rotation et qui présente, par rapport à l'horizontale, une première partie inclinée d'obturation et une deuxième partie inclinée permettant d'évacuer les selles liquides.

Il n'est pas décrit ici la zone de réception vers laquelle les selles sont évacuées car ses caractéristiques dépendront du mode de traitement choisi pour les matières.

Il s'agira généralement d'une sorte de sas ventilé permettant au moins de contenir les matières solides et les liquides en attente, dans des contenants étanches.

Avantageusement, l'invention permet d'obtenir une séparation des liquides et des solides, ce qui permet d'en faciliter la récupération, le traitement et la valorisation.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue en perspective éclatée d'un dispositif de toilette sèche selon l'invention ;
- la figure 2 représente une vue en coupe longitudinale du premier mode de réalisation, du dispositif de toilette sèche ;
- la figure 3 représente une vue en coupe longitudinale du deuxième mode de réalisation du dispositif de toilette sèche ;
- la figure 4 représente une vue en coupe longitudinale de détails d'une raclette d'évacuation des selles selon l'invention dans une première réalisation ;
- la figure 5 représente une vue en coupe longitudinale de détails d'une raclette d'évacuation des selles selon l'invention dans une deuxième réalisation ;
- la figure 6 représente une vue légèrement en perspective du dispositif de toilette sèche avec un élément d'obturation selon une deuxième variante de réalisation ;
- la figure 7 représente une vue générale en coupe longitudinale d'une variante de réalisation du dispositif de toilette sèche ;
- les figures 8a à 8c représentent une vue en coupe longitudinale de détails du nettoyage de la raclette d'évacuation des selles par une deuxième raclette.

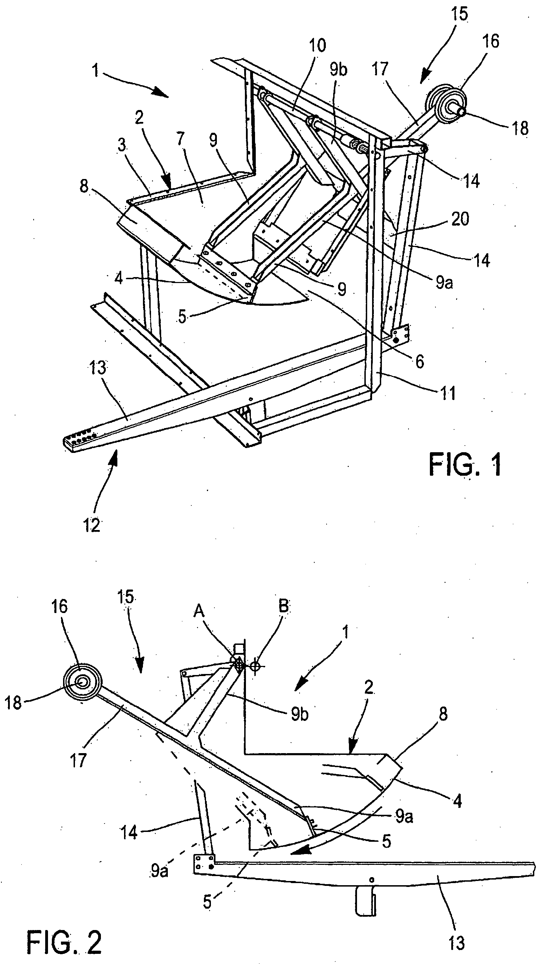

Comme décrit sur les figures 1 à 8c, la présente invention décrit un dispositif de toilette sèche 1 mécanique comprenant une cuvette rigide 2 ayant un siège 3, une partie courbe concave (creuse) 4 et une raclette 5 d'évacuation des selles (ou balai de raclage, lame).

La partie courbe concave 4 n'est pas droite et est avantageusement en arc de cercle.

Dans toute la suite de la description, la partie courbe 4 est en arc de cercle.

La partie en arc de cercle 4 reçoit les selles et présente une extrémité inférieure à partir de laquelle sont évacuées ces selles par une ouverture inférieure 6 (ou espace) sous l'action de la raclette 5 d'évacuation. Les selles ainsi déplacées sont déposées dans un réceptacle à l'arrière de la cuvette rigide 2.

La partie en arc de cercle 4 est assemblée par exemple par soudage sur deux flancs latéraux 7 (ou bords latéraux) dont un seul est représenté.

Elle peut, par exemple, être en acier inoxydable.

Elle présente, à son extrémité supérieure, un élément de butée 8 de la raclette, ici sous la forme d'une plaque de protection.

A titre illustratif uniquement, elle peut avoir la forme d'un quart ou d'un huitième de rond en fonction du rayon de courbure utilisé de la partie en arc ce cercle.

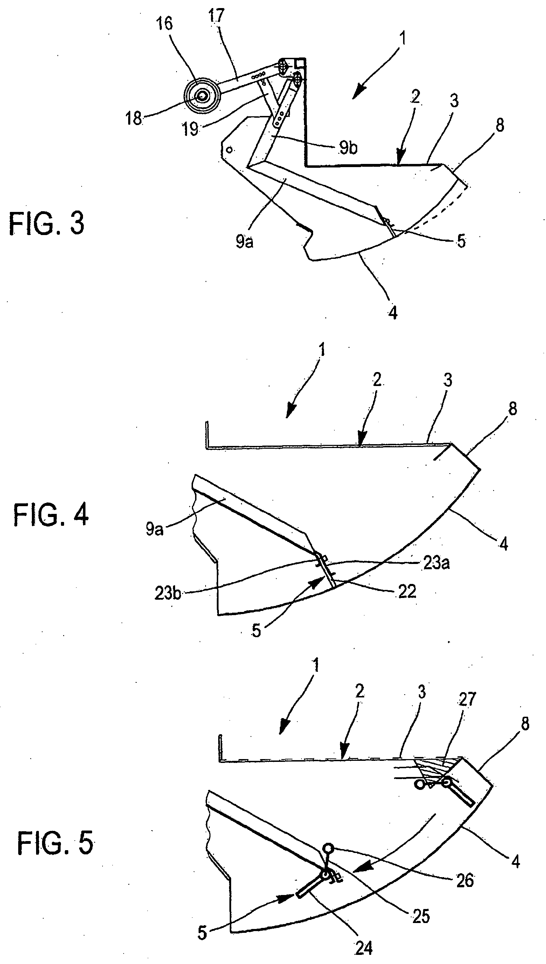

En variante de réalisation, plusieurs parties en arc de cercle peuvent être représentées avec des rayons de courbure différents, comme indiqué en pointillés sur la figure 3, pour réaliser le décollement de la raclette d'évacuation 5 lors de la remontée.

Comme décrit en particulier sur les figures 1 et 2, la raclette 5 d'évacuation des selles est déplacée par un ou plusieurs bras de rotation 9 qui pivotent de façon à déplacer la raclette 5 dans un sens de descente et dans un sens de remontée entre une position initiale haute et une position basse.

Ici, il est utilisé deux bras de rotation 9 mais un seul bras de rotation 9 suffit.

Plus précisément, les bras de rotation 9 permettent de faire glisser ou racler la raclette d'évacuation 5 sur la partie en arc de cercle 4 de la cuvette dans le sens de descente pour évacuer les selles.

La raclette d'évacuation 5 est fixée par une réglette fixée aux extrémités des deux bras de rotation 9 par des vis.

Les bras de rotation 9 sont articulés sur un arbre de rotation 10, libre en rotation autour d'un axe A et en appui à ses extrémités sur des armatures verticales 11 de support.

En l'espèce, ici, les armatures verticales 11 s'étendent au dessus de la cuvette et donc les bras de rotation 9 s'étendent au dessus de la cuvette.

L'arbre de rotation 10 est situé par exemple à une hauteur égale au double de la hauteur de la cuvette.

Les bras de rotation 9 présentent une forme en L (ou déport) basculée à 90° dans le sens de courbure de la partie en arc de cercle 4 de la cuvette rigide 2 pour que la plus grande branche du L soit fixée à la raclette d'évacuation 5 et la plus petite branche du L soit fixée à l'arbre de rotation 10.

Les bras de rotation 9 sont situés à proximité des flancs latéraux 7 de la cuvette rigide 2.

Ils peuvent être muni latéralement de raclette (ou balai de raclage, lame) non représentée, sur leur hauteur ou longueur pour nettoyer les deux flancs latéraux 7.

Un moyen d'actionnement 12 est relié aux bras de rotation 9 par un système de levier et agit de façon à faire pivoter les bras de rotation 9 dans le sens de la descente.

Plus précisément, ici, le moyen d'actionnement 12 comporte une barre 13 servant de pédale d'actionnement légèrement inclinée par rapport à l'horizontale et qui transmet son mouvement à l'arbre de rotation 10 par le système de levier et de barre de transmission 14 articulés entre eux et qui transmettent son mouvement.

Des moyens de rappel sont reliés aux bras de rotation 9 et agissent directement sur eux de façon à les ramener dans leur position initiale haute pour laquelle la raclette d'évacuation 5 est en appui dans la cuvette contre la plaque en tôle de butée 8.

Dans le mode de réalisation préféré, les moyens de rappel comportent une structure de contrepoids 15 qui permet de contrebalancer le poids du ou des bras de rotation 9 et de la raclette d'évacuation 5 et de les ramener en position initiale haute après le relâchement du moyen d'actionnement 12.

La structure de contrepoids 15 comporte un (ou plusieurs) poids 16 fixé à un bras de contrepoids 17, lui-même fixé au(x) bras de rotation 9.

Plus précisément, une tige transversale 18 au bras de contrepoids 17 porte le poids 16 et est fixée à son extrémité arrière.

En référence à la figure 2, le bras de contrepoids 17 est fixé directement sur les bras de rotation 9 ou par un élément transversal intermédiaire. Il peut être fixé dans une direction sensiblement parallèle aux directions des bras de rotation 9.

En variante, à la figure 3, le bras de contrepoids 17 pivote et est fixé sur les bras de rotation 9 par l'intermédiaire d'une bielle de transmission 19 (dispositif démultiplicateur d'efforts).

L'avantage de cette variante de réalisation est de donner au contrepoids un débattement angulaire plus grand que le déplacement propre des bras de rotation 9, de façon à donner une progressivité de l'effort à fournir sur le mécanisme. En début de mouvement, l'effort du bras de contrepoids 17 est faible, générant moins de force de rappel, ce qui facilite le lancement du mécanisme.

D'autres formes de structure de contrepoids 15 sont réalisables sans sortir de la portée de la présente invention.

La structure de contrepoids 15 est, ici sur les figures, illustrée en partie au dessus de la cuvette rigide 2.

En l'occurrence, elle est située entre les deux flancs latéraux 7 de la cuvette.

Le bras de contrepoids 17 peut notamment être centré par rapport à un plan perpendiculaire vertical passant par le milieu de la raclette 5.

En variante non représentée, cette structure de contrepoids 15 peut être seulement en partie entre les deux flancs latéraux 7, voire déportée (ou décentrée) complètement par rapport aux flancs latéraux 7 de la cuvette.

En variante de réalisation non représentée, la structure de contrepoids 15 peut être remplacée par une structure de rappel avec ressorts.

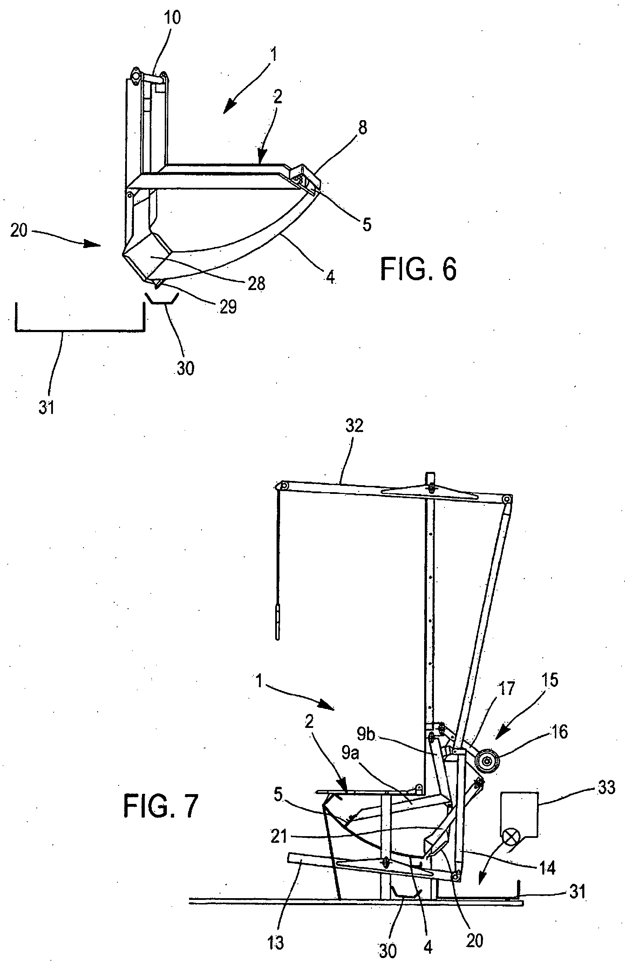

Comme illustré sur les figures 1 et 6, un élément d'obturation 20 (ou volet) est fixé aux bras de rotation 9.

Il permet de cacher l'ouverture inférieure 6 de l'évacuation vers la zone de stockage des selles du fait de son agencement et de son positionnement incliné par rapport à la verticale au niveau de l'extrémité inférieure de la partie en arc de cercle 4 à partir de laquelle s'évacuent les selles.

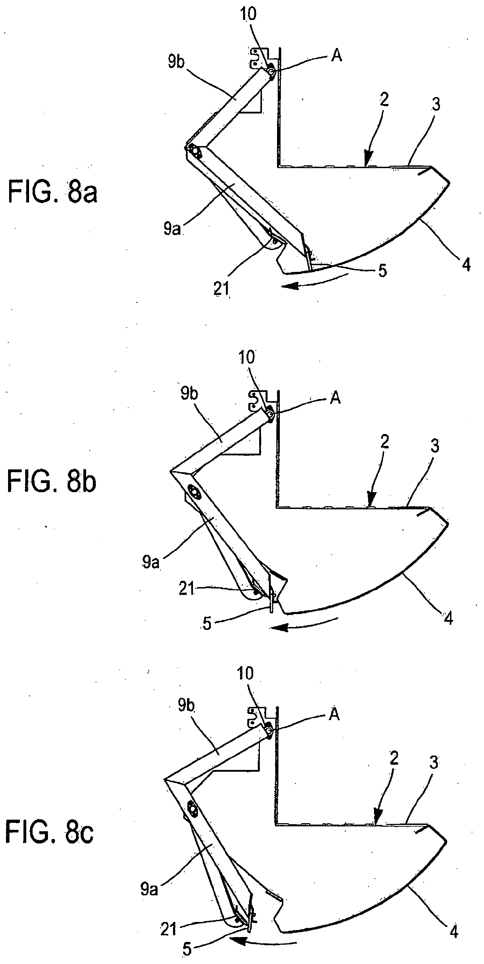

Comme illustré sur les figures 8a à 8b, le dispositif de toilette sèche 1 comporte une deuxième raclette 21 (ou balai de raclage, lame) montée libre en rotation par rapport à la cuvette rigide 2 et par rapport à l'arbre de rotation 10.

Un moyen de rappel, par exemple élastique, non illustré ici, permet de ramener la deuxième raclette 21 dans sa position initiale.

La deuxième raclette 21 présente un angle d'inclinaison par rapport à une face avant de raclage de la raclette 5 d'évacuation des selles, de façon à nettoyer la raclette 5 d'évacuation des selles à la descente de cette dernière le long de la partie en arc de cercle 4, à proximité et au-dessus de l'ouverture inférieure 6 de l'évacuation des selles, lorsque la raclette 5 s'éloigne de la partie en arc de cercle 4, comme illustré par la flèche sur les figures 8a à 8c.

En référence aux figures 2 à 5, le dispositif de toilette sèche 1 comporte des moyens agencés pour le raclage permettant d'obtenir une force de raclage de la raclette 5 sur la partie en arc de cercle 4 de la cuvette, dans le sens de la descente, supérieure à la force de raclage obtenue dans le sens de la remontée.

De plus, cette force de raclage est plus grande dans la partie basse que dans la partie haute de la cuvette rigide 2 dans le sens de la descente.

En l'occurrence, les moyens agencés pour le raclage comportent l'arbre de rotation 10 du bras de rotation 9, et donc son axe de rotation A, décentré par rapport au centre géométrique B de la partie en arc de cercle 4, comme illustré sur la figure 2.

De plus, les moyens de raclage sont conformés de façon à permettre un déplacement de l'extrémité inférieure de la raclette 5 d'évacuation par rapport à la partie en arc de cercle 4, différent dans le sens de la remontée et dans le sens de la descente.

Dans une première réalisation illustrée, la raclette 5 d'évacuation est équipée d'un élément souple 22 (ou flexible) de raclage et de deux éléments rigides 23a, 23b fixés aux bras de rotation 9 et qui pincent l'élément souple 22.

Ils sont agencés par rapport à l'élément souple 22 pour permettre une plus grande déformation de l'élément souple 22 (et donc moins de raclage) pendant la remontée.

En l'occurrence, en référence à la figure 4, une grande réglette rigide arrière 23a et une petite réglette rigide 23b avant permettent à l'élément souple 22 de racler avec appui la partie en arc de cercle 4 dans le sens de la descente et de se déformer pour éviter de racler dans le sens de la remontée.

L'élément souple 22 peut être disposé sensiblement perpendiculairement ou avec un léger angle à la surface 4 à essuyer.

Il peut être constitué d'un matériau élastomère de type caoutchouc qui peut avoir une dureté moyenne. Par exemple de 60 à 80 shores.

Dans une deuxième réalisation, la raclette 5 d'évacuation est articulée mobile en rotation par rapport aux bras de rotation 9.

Elle est équipée d'un élément 24 de raclage et d'une tige 25 articulée, à l'extrémité de laquelle est fixé un poids 26 situé à l'opposé de la raclette 5, de façon à éviter le contact de la raclette 5 avec la surface de la partie en arc de cercle 4 pendant la remontée, du fait du basculement du poids 26 dans le sens horaire. En remontée, la raclette 5 est en position sensiblement parallèle ou légèrement inclinée par rapport à la surface de la partie en arc de cercle 4, ce qui permet d'éviter d'entraîner d'éventuels dépôts résiduels des selles vers le haut de la cuvette 4.

Le poids 26 peut être supprimé et il est envisageable de laisser libre en rotation l'élément de raclage 24 qui pivote lors de la remontée dès qu'il rencontre des selles solides et vient en frottements contre la cuvette lors de la descente de la raclette pour éliminer les selles.

Une butée en saillie 27 permet de repositionner en surplomb le poids 26, par basculement dans le sens anti-horaire, pour positionner l'élément de raclage 24 sensiblement perpendiculairement à la surface de la partie en arc de cercle 4.

L'élément de raclage 24 peut être souple ou rigide en fonction du décentrage ou non de l'arbre de rotation 10 par rapport au centre de géométrie B.

Dans les deux variantes de réalisation, la raclette d'évacuation peut présenter une longueur égale à la largeur de la partie en arc ce cercle.

Comme représenté en figure 6, l'élément d'obturation présente des moyens de séparation des selles liquides et solides, ce qui permet un traitement différentié de ces deux déchets.

Les moyens de séparation comportent une première plaque 28 inclinée d'obturation articulée et une deuxième plaque 29 inclinée d'évacuation des selles liquides faisant office de déversoir.

La première plaque 28 est articulée sur le ou les bras de rotation 9. Elle présente des bords relevés.

La deuxième plaque 29 peut être inclinée différemment de la partie en arc de cercle 4. Elle présente des bords relevés.

Ces plaques 28 et 29 présentent des largeurs plus grandes que celles de la partie 4 en arc de cercle.

Un premier réceptacle 30 (par exemple un réservoir à vidanger) permet de recevoir les selles liquides et est situé en partie, dessous la deuxième plaque 29 inclinée.

Un deuxième réceptacle 31 (par exemple un sac compostable) permet de recevoir les selles solides et est situé dans le prolongement de l'extrémité inférieure de la partie en arc de cercle 4.

Un moyen d'actionnement 12 à poignée avec balancier de manoeuvre illustré sur la figure 7 peut compléter ou remplacer le mécanisme d'actionnement à pédale.

En variante, il peut être disposé un moyen d'actionnement 12 motorisé.

Un dispositif de pompe non représenté relié aux réceptacles permet d'évacuer les selles liquides.

Un dispositif additionnel peut être ajouté pour favoriser le traitement des déchets.

Il peut comporter un système de dosage 33 déclenché à chaque manoeuvre du mécanisme d'évacuation, avec une réserve de produit suffisante compte tenu de la dose délivrée à chaque action de mécanisme, et de l'autonomie souhaitée.

Les produits peuvent être des additifs carbonés (copeaux, sciure) permettant de compenser l'apport d'azote, en vue d'un compostage des matières. Les produits peuvent être de toute autre nature, solide ou liquide, selon le procédé de traitement des déchets.

Le fonctionnement du dispositif de toilette sèche 1 est le suivant.

Dans un premier temps, les selles liquides tombent par l'ouverture inférieure 6 dans le premier réceptacle 30, au fur et à mesure de leur écoulement.

En variante de réalisation, la deuxième plaque 29 et le premier réceptacle 30 sont remplacés par une goulotte solidaire de la première plaque 28, cette goulotte permettant d'évacuer les selles liquides.

Dans un deuxième temps, l'utilisateur déclenche le moyen d'actionnement 12. Les selles déposées sur la surface de la partie en arc de cercle 4 sont déplacées vers l'extrémité inférieure de la cuvette par la raclette 5 d'évacuation des selles qui fait un mouvement circulaire, suite au mouvement circulaire du ou des bras de rotation 9 reliés au moyen d'actionnement 12.

Les selles solides tombent par l'ouverture inférieure 6 dans le deuxième réceptacle 31 situé dans le sas ventilé.

L'élément obturateur est en position dite ouverte éloigné de l'extrémité inférieure de la raclette rigide 5.

La raclette 5 d'évacuation parcourt donc toute la partie en arc de cercle 4, sur toute sa largeur, entre la position initiale haute et la position basse.

A la fin de son déplacement, la raclette 5 d'évacuation vient au contact de la deuxième raclette 21 et un mouvement de balancier illustré sur les figures 8a à 8c entre les deux raclettes permet de nettoyer la raclette 5 d'évacuation.

La libération du déclenchement du moyen d'actionnement 12 permet le travail ou retour du dispositif 15 de contrepoids et la raclette 5 d'évacuation est ramenée en position initiale haute en butée contre la plaque de butée 8 sous l'avant du siège 3.

L'utilisation du dispositif 15 de contrepoids permet un retour franc du dispositif.

L'agencement particulier de la raclette 5 d'évacuation permet un raclage important dans la phase de descente et évite le raclage par un frottement faible voire nul de la raclette 5 dans la phase de remontée.

Ce dispositif est utilisable pour toute application.

Il peut être utilisé pour un usage domestique ou pour un usage public, par exemple sur les plages pendant la période estivale.

## Revendications

1. Dispositif de toilette sèche (1) comprenant :
- une cuvette rigide (2) présentant un siège (3),
- au moins une partie concave (4) destinée à recevoir les selles,
- au moins un bras de rotation (9) sur lequel est fixé une raclette (5) d'évacuation des selles, le bras de rotation (9) pivotant de façon à faire déplacer la raclette d'évacuation (5) sur la partie concave (4), entre deux positions, dans un sens de descente pour évacuer les selles hors de la partie concave (4) dans une ouverture inférieure (6),
- un moyen d'actionnement (12) relié au bras de rotation (9), pour sous l'action de l'utilisateur, faire pivoter le bras dé rotation (9),
- des moyens de rappel reliés au bras de rotation (9), permettant de ramener le bras de rotation (9),
**caractérisé en ce que** :
- la cuvette présente la partie concave (4) destinée à recevoir les selles, la partie concave étant en arc de cercle,
- le bras de rotation (9) pivote de façon à faire déplacer la raclette d'évacuation (5) sur la partie concave (4), entre une position initiale haute et une position basse,
- la raclette (5) d'évacuation est agencée pour présenter une déformation ou un déplacement d'une extrémité inférieure par rapport à la partie en arc de cercle (4), différent dans le sens de la remontée et dans le sens de la descente, de façon à obtenir une force de raclage sur la partie en arc de cercle (4) de la cuvette rigide (2), dans le sens de la descente vers la position basse, supérieure à la force de raclage diminuée ou nulle obtenue dans le sens de la remontée vers la position initiale haute,
- le moyen d'actionnement (12) est relié au bras de rotation (9), pour sous l'action de l'utilisateur, faire pivoter le bras de rotation (9) dans le sens de descente depuis la position initiale haute jusqu'à la position basse, et
- les moyens de rappel permettent de ramener le bras de rotation (9) à sa position initiale haute dans laquelle la raclette d'évacuation (5) est en appui dans la cuvette.

2. Dispositif de toilette sèche (1) selon la revendication 1, **caractérisé en ce que** les moyens de rappel comportent une structure de contrepoids (15) comportant au moins un poids (16) fixé à un bras de contrepoids (17) fixé directement ou indirectement au bras de rotation (9).

3. Dispositif de toilette sèche (1) selon la revendication 2, **caractérisé en ce que** le bras de contrepoids (17) est fixé sur le bras de rotation (9) par l'intermédiaire d'une bielle (19).

4. Dispositif de toilette sèche (1) selon l'une des revendications 1 à 3, **caractérisé en ce qu'**un axe de rotation (A) du bras de rotation (9) est décentré par rapport au centre géométrique (B) de la partie en arc de cercle (4).

5. Dispositif de toilette sèche (1) selon l'une des revendications 1 à 4, **caractérisé en ce que** la raclette (5) est équipée d'un élément souple de raclage (22) et d'au moins un élément rigide (23a, 23b) situé par rapport à l'élément souple (22) de façon à permettre une plus grande déformation de l'élément souple (22) pendant la remontée.

6. Dispositif de toilette sèche (1) selon l'une des revendications 1 à 5, **caractérisé en ce que** la raclette d'évacuation (5) est mobile en rotation par rapport au bras de rotation (9).

7. Dispositif de toilette sèche (1) selon l'une des revendications 1 à 6, **caractérisé en ce que** le bras dé rotation (9) pivote sur un arbre de rotation (10) situé au-dessus de la cuvette rigide (2)

8. Dispositif de toilette sèche (1) selon la revendication 7, **caractérisé en ce que** le bras de rotation (9) présente une partie articulée (9b) sur l'arbre de rotation (10) et une partie perpendiculaire (9a) à la partie articulée comportant à une extrémité inférieure la raclette (5) d'évacuation des selles.

9. Dispositif de toilette sèche (1) selon l'une des revendications 1 à 8, **caractérisé en ce qu'**il comporte une deuxième raclette (21) montée mobile en rotation par rapport au bras de rotation (9), à proximité de l'ouverture inférieure (6) de l'évacuation des selles, de façon à nettoyer la raclette (5) d'évacuation des selles après sa descente.

10. Dispositif de toilette sèche (1) selon l'une des revendications 1 à 9, **caractérisé en ce qu'**il comporte un élément d'obturation (20) de l'ouverture inférieure (6) de l'évacuation des selles fixé au bras de rotation (9) et qui présente, par rapport à l'horizontale, une première partie inclinée (28) d'obturation et une deuxième partie (29) inclinée permettant d'évacuer les selles liquides.

11. Dispositif de toilette sèche (1) selon l'une des revendications 1 à 10, **caractérisé en ce qu'**il comporte deux bras de rotation (9) à l'extrémité inférieure desquels est fixée la raclette d'évacuation (5).

## Patentansprüche

1. Trockentoilettenvorrichtung (1), welche umfasst:
- ein starres Becken (2), das einen Sitz (3) aufweist,
- wenigstens einen konkaven Teil (4), der dazu bestimmt ist, die Fäkalien aufzunehmen,
- wenigstens einen Dreharm (9), an welchem ein Schaber (5) zum Abstreifen der Fäkalien befestigt ist, wobei der Dreharm (9) derart schwenkt, dass er ein Verschieben des Abstreifschabers (5) auf dem konkaven Teil (4) zwischen zwei Positionen in einer Abwärtsrichtung bewirkt, um die Fäkalien von dem konkaven Teil (4) weg in eine untere Öffnung (6) zu befördern,
- ein Betätigungsmittel (12), das mit dem Dreharm (9) verbunden ist, um bei Betätigung durch den Benutzer ein Schwenken des Dreharms (9) zu bewirken,
- Rückholmittel, die mit dem Dreharm (9) verbunden sind und es ermöglichen, den Dreharm (9) zurückzubewegen,
**dadurch gekennzeichnet, dass**:
- das Becken den konkaven Teil (4) aufweist, der dazu bestimmt ist, die Fäkalien aufzunehmen, wobei der konkave Teil kreisbogenförmig ist,
- der Dreharm (9) derart schwenkt, dass er ein Verschieben des Abstreifschabers (5) auf dem konkaven Teil (4) zwischen einer hohen Anfangsposition und einer niedrigen Position bewirkt,
- der Abstreifschaber (5) dazu eingerichtet ist, eine Verformung oder eine Verschiebung eines unteren Endes bezüglich des kreisbogenförmigen Teils (4) aufzuweisen, die in der Richtung der Aufwärtsbewegung und in der Richtung der Abwärtsbewegung unterschiedlich ist, derart, dass in der Richtung der Abwärtsbewegung zur niedrigen Position hin eine auf den kreisbogenförmigen Teil (4) des starren Beckens (2) ausgeübte Schabekraft erzielt wird, die größer als die verminderte oder nicht vorhandene Schabekraft ist, die in der Richtung der Aufwärtsbewegung zur hohen Anfangsposition hin erzielt wird,
- das Betätigungsmittel (12) mit dem Dreharm (9) verbunden ist, um bei Betätigung durch den Benutzer ein Schwenken des Dreharms (9) in der Richtung der Abwärtsbewegung von der hohen Anfangsposition bis zur niedrigen Position zu bewirken, und
- die Rückholmittel ermöglichen, den Dreharm (9) in seine hohe Anfangsposition zurückzubewegen, in welcher der Abstreifschaber (5) im Becken anliegt.

2. Trockentoilettenvorrichtung (1) nach Anspruch 1, **dadurch gekennzeichnet, dass** die Rückholmittel eine Gegengewichtkonstruktion (15) aufweisen, die wenigstens ein Gewicht (16) aufweist, das an einem Gegengewichtarm (17) befestigt ist, der direkt oder mittelbar am Dreharm (9) befestigt ist.

3. Trockentoilettenvorrichtung (1) nach Anspruch 2, **dadurch gekennzeichnet, dass** der Gegengewichtarm (17) am Dreharm (9) über eine Schubstange (19) verbunden ist.

4. Trockentoilettenvorrichtung (1) nach einem der Ansprüche 1 bis 3, **dadurch gekennzeichnet, dass** eine Drehachse (A) des Dreharms (9) exzentrisch bezüglich des geometrischen Mittelpunkts (B) des kreisbogenförmigen Teils (4) angeordnet ist.

5. Trockentoilettenvorrichtung (1) nach einem der Ansprüche 1 bis 4, **dadurch gekennzeichnet, dass** der Schaber (5) mit einem flexiblen Schabelement (22) und mit wenigstens einem starren Element (23a, 23b) ausgestattet ist, das bezüglich des flexiblen Elements (22) derart angeordnet ist, dass es eine größere Verformung des flexiblen Elements (22) während der Aufwärtsbewegung ermöglicht.

6. Trockentoilettenvorrichtung (1) nach einem der Ansprüche 1 bis 5, **dadurch gekennzeichnet, dass** der Abstreifschaber (5) drehbeweglich bezüglich des Dreharms (9) ist.

7. Trockentoilettenvorrichtung (1) nach einem der Ansprüche 1 bis 6, **dadurch gekennzeichnet, dass** der Dreharm (9) auf einer Drehwelle (10) schwenkt, die oberhalb des starren Beckens (2) angeordnet ist.

8. Trockentoilettenvorrichtung (1) nach Anspruch 7, **dadurch gekennzeichnet, dass** der Dreharm (9) einen auf der Drehwelle (10) angelenkten Teil (9b) aufweist, sowie einen zu dem angelenkten Teil senkrechten Teil (9a), der an einem unteren Ende den Schaber (5) zum Abstreifen der Fäkalien aufweist.

9. Trockentoilettenvorrichtung (1) nach einem der Ansprüche 1 bis 8, **dadurch gekennzeichnet, dass** sie einen zweiten Schaber (21) aufweist, der drehbeweglich bezüglich des Dreharms (9) in der Nähe der unteren Öffnung (6) zur Abführung der Fäkalien angebracht ist, um den Schaber (5) zum Abstreifen der Fäkalien nach dessen Abwärtsbewegung zu reinigen.

10. Trockentoilettenvorrichtung (1) nach einem der Ansprüche 1 bis 9, **dadurch gekennzeichnet, dass** sie ein Verschlusselement (20) für die untere Öffnung (6) zur Abführung der Fäkalien aufweist, das am Dreharm (9) befestigt ist und das bezüglich der Horizontalen einen ersten geneigten Teil (28) zum Verschluss und einen zweiten geneigten Teil (29) aufweist, der es ermöglicht, die flüssigen Fäkalien abzuführen.

11. Trockentoilettenvorrichtung (1) nach einem der Ansprüche 1 bis 10, **dadurch gekennzeichnet, dass** sie zwei Dreharme (9) aufweist, an deren unterem Ende der Abstreifschaber (5) befestigt ist.

## Claims

1. Dry toilet device (1) comprising:
- a rigid bowl (2) having a seat (3),
- at least one concave part (4) intended to receive stools,
- at least one rotation arm (9) on which a scraper (5) for evacuating the stools is fixed, the rotation arm (9) pivoting so as to move the evacuation scraper (5) over the concave part (4) in a descending direction between two positions in order to evacuate the stools from the concave part (4) into a lower opening (6),
- an actuating means (12) connected to the rotation arm (9) so as to pivot the rotation arm (9) under the action of the user,
- return means that are connected to the rotation arm (9) and return the rotation arm (9),
**characterized in that**:
- the bowl has the concave part (4) that is intended to receive the stools, the concave part being in the form of a circular arc,
- the rotation arm (9) pivots so as to move the evacuation scraper (5) over the concave part (4) between an initial top position and a bottom position,
- the evacuation scraper (5) is arranged to have a deformation or displacement of a lower end with respect to the part (4) that is in the form of a circular arc, said deformation or displacement being different in the rising direction than in the descending direction, so as to obtain a scraping force on the part (4) of the rigid bowl (2) that is in the form of a circular arc that is greater in the descending direction towards the bottom position than the reduced or zero scraping force that is obtained in the rising direction towards the initial top position,
- the actuating means (12) is connected to the rotation arm (9) in order to pivot the rotation arm (9), under the action of the user, in the descending direction from the initial top position to the bottom position, and
- the return means enable to return the rotation arm (9) to its initial top position in which the evacuation scraper (5) is supported in the bowl.

2. Dry toilet device (1) according to Claim 1, **characterized in that** the return means comprise a counterweight structure (15) comprising at least one weight (16) fixed to a counterweight arm (17) that is fixed directly or indirectly to the rotation arm (9).

3. Dry toilet device (1) according to Claim 2, **characterized in that** the counterweight arm (17) is fixed to the rotation arm (9) by way of a link rod (19).

4. Dry toilet device (1) according to one of Claims 1 to 3, **characterized in that** a rotation axis (A) of the rotation arm (9) is off-centre with respect to the geometric centre (B) of the part (4) that is in the form of a circular arc.

5. Dry toilet device (1) according to one of Claims 1 to 4, **characterized in that** the scraper (5) is equipped with a flexible scraping element (22) and at least one rigid element (23a, 23b) that is situated with respect to the flexible element (22) so as to allow greater deformation of the flexible element (22) during the rising operation.

6. Dry toilet device (1) according to one of Claims 1 to 5, **characterized in that** the evacuation scraper (5) is rotatable with respect to the rotation arm (9).

7. Dry toilet device (1) according to one of Claims 1 to 6, **characterized in that** the rotation arm (9) pivots on a rotation shaft (10) situated above the rigid bowl (2).

8. Dry toilet device (1) according to Claim 7, **characterized in that** the rotation arm (9) has a part (9b) that is articulated on the rotation shaft (10) and a part (9a) that is perpendicular to the articulated part comprising at a lower end the scraper (5) for evacuating stools.

9. Dry toilet device (1) according to one of Claims 1 to 8, **characterized in that** it comprises a second scraper (21) that is mounted in a rotatable manner with respect to the rotation arm (9), close to the lower opening (6) for evacuating stools, so as to clean the scraper (5) for evacuating stools after it has descended.

10. Dry toilet device (1) according to one of Claims 1 to 9, **characterized in that** it comprises an element (20) for closing the lower opening (6) for evacuating stools, said element being fixed to the rotation arm (9) and having, with respect to the horizontal, a first, inclined closing part (28) and a second, inclined part (29) for evacuating liquid stools.

11. Dry toilet device (1) according to one of Claims 1 to 10, **characterized in that** it comprises two rotation arms (9) at the lower end of which the evacuation scraper (5) is fixed.
